# EUROPEAN PATENT APPLICATION

(11) **EP 4 422 259 A1**
(43) Date of publication of application: **28.08.2024**
(21) Application number: 22883656.5
(22) Date of filing: 21.10.2022
(51) Int. Cl.: H04W 24/10, H04W 72/20

(54) **COMMUNICATION DEVICE, BASE STATION, AND COMMUNICATION METHOD**

(30) Priority: 21.10.2021 JP 2021172745
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: YAMAMOTO, Tomoyuki, Kariya- city, Aichi 4488661 (JP); TAKAHASHI, Hideaki, Kariya- city, Aichi 4488661 (JP)
(74) Representative: TBK
(86) International application number: PCT/JP2022/039221
(87) International publication number: WO 2023/068353

(57) **Abstract**

A communication apparatus (100) according to an embodiment comprises: a communicator (110) configured to receive a radio resource control (RRC) message including a plurality of measurement gap configurations from a network (10); and a controller (120) configured to perform measurement on a positioning reference signal during each measurement gap configured based on the plurality of measurement gap configurations. The RRC message includes identification information associated with each of the plurality of measurement gap configurations. The identification information indicates that an associated measurement gap configuration is for measurement of the positioning reference signal.

## Description

### Cross-Reference to Related Applications

This application is based on and claims the benefit of priority of Japanese Patent Application No. 2021-172745, filed on October 21, 2021, the entire contents of which are incorporated herein by reference.

### Technical Field

The present disclosure relates to a communication apparatus, a base station, and a communication method.

### Background Art

In a 3rd Generation Partnership Project (hereinafter, 3GPP (registered trademark)) which is a mobile communication system standardization project, a plurality of measurement gap configurations for configuring a gap pattern constituted by a measurement gap capable of interrupting communication with a base station are configured in a communication apparatus (see Non Patent Literature 1). Accordingly, the communication apparatus can perform measurement on a measurement object in a region other than a serving cell during the measurement gap configured on the basis of the measurement configurations in a state in which connection with the base station (the serving cell) is maintained.

In recent years, there has been discussed a method of configuring a plurality of gap patterns in a communication apparatus so that measurement can be performed on each measurement object with an optimal gap pattern even in a case in which there are a plurality of measurement objects to be measured by the communication apparatus (see Non Patent Literature 2).

### Citation List

### Non Patent Literature

Non Patent Literature 1: 3GPP technical specification TS38.331 V16.6.0
Non Patent Literature 2: 3GPP Contribution "RP-211591"

### Summary of Invention

A communication apparatus according to a first aspect comprises: a communicator configured to receive a radio resource control (RRC) message including a plurality of measurement gap configurations from a network; and a controller configured to perform measurement on a positioning reference signal during each measurement gap configured based on the plurality of measurement gap configurations. The RRC message includes identification information associated with each of the plurality of measurement gap configurations. The identification information indicates that an associated measurement gap configuration is for measurement of the positioning reference signal.

A base station according to a second aspect comprises: a communicator configured to transmit a radio resource control (RRC) message including a plurality of measurement gap configurations to a communication apparatus. The RRC message includes identification information associated with each of the plurality of measurement gap configurations. The identification information indicates that an associated measurement gap configuration is for measurement of the positioning reference signal.

A communication method according to a third aspect comprises the steps of: receiving a radio resource control (RRC) message including a plurality of measurement gap configurations from a network; and performing measurement on a positioning reference signal during each measurement gap configured based on the plurality of measurement gap configurations. The RRC message includes identification information associated with each of the plurality of measurement gap configurations. The identification information indicates that an associated measurement gap configuration is for measurement of the positioning reference signal.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack in a mobile communication system according to an embodiment.
Fig. 3 is a sequence diagram illustrating an operation example of a UE in which a gap pattern is configured.
Fig. 4 is a diagram for describing an information element in an RRC message.
Fig. 5 is a diagram illustrating a configuration of a UE according to an embodiment.
Fig. 6 is a diagram illustrating a configuration of a base station according to an embodiment.
Fig. 7 is a sequence diagram for describing an operation example according to an embodiment.
Fig. 8 is a diagram (1/2) for describing information elements in an RRC message according to a first operation example.
Fig. 9 is a diagram (2/2) for describing information elements in an RRC message according to the first operation example.
Fig. 10 is a diagram for describing information elements in an RRC message according to a first modification example of the first operation example.
Fig. 11 is a diagram for describing information elements in an RRC message according to a second modification example of the first operation example.
Fig. 12 is a diagram for describing information elements in an RRC message according to a third modification example of the first operation example.
Fig. 13 is a diagram for describing information elements in an RRC message according to a fourth modification example of the first operation example.
Fig. 14 is a diagram (1/3) for describing information elements in an RRC message according to a second operation example.
Fig. 15 is a diagram (2/3) for describing information elements in an RRC message according to the second operation example.
Fig. 16 is a diagram (3/3) for describing information elements in an RRC message according to the second operation example.
Fig. 17 is a diagram for describing information elements in an RRC message according to a deflection example of the second operation example.
Fig. 18 is a diagram (1/2) for describing information elements in an RRC message according to a third operation example.
Fig. 19 is a diagram (2/2) for describing information elements in an RRC message according to the third operation example.
Fig. 20 is a diagram (1/2) for describing information elements in an RRC message according to a fourth operation example.
Fig. 21 is a diagram (2/2) for describing information elements in an RRC message according to the fourth operation example.
Fig. 22 is a diagram for describing information elements in an RRC message according to a fifth operation example.

### Description of Embodiments

A mobile communication system according to an embodiment will be described with reference to the drawings. In the description of the drawings, the same or similar parts are denoted by the same or similar reference numerals.

In the current 3GPP technical specification, while a plurality of measurement objects can be configured in the communication apparatus, only one gap pattern can be configured in the communication apparatus. Therefore, it is likely that it is difficult to perform appropriate measurement in a case in which a plurality of gap patterns are configured in the communication apparatus. Therefore, it is an object of the present disclosure to provide a communication apparatus, a base station, and a communication method that enable appropriate measurement in a case in which a plurality of gap patterns are configured.

### (Configuration of Mobile Communication System)

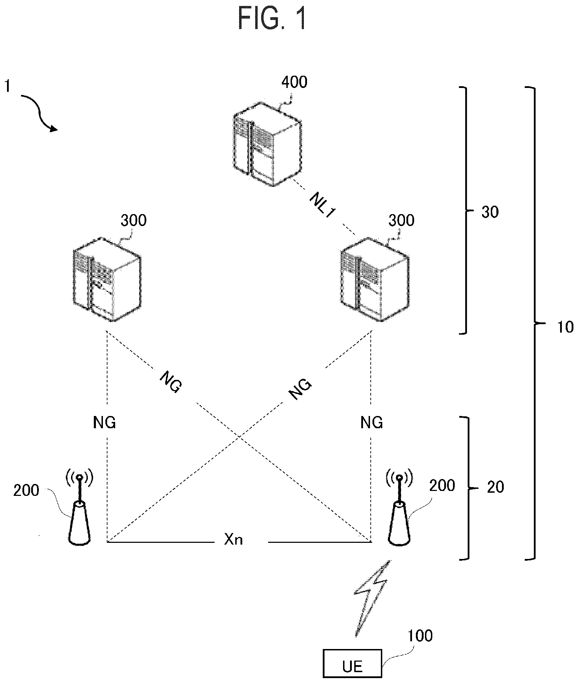

A configuration of a mobile communication system 1 according to the embodiment will be described with reference to Fig. 1. The mobile communication system 1 is, for example, a system conforming to the 3GPP technical specification (TS). Hereinafter, a description will proceed with an example in which the 5th generation system (5GS) of the 3GPP standard, that is, a mobile communication system based on NR (New Radio) is used as the mobile communication system 1.

The mobile communication system 1 includes a network 10 and a user equipment (UE) 100 that communicates with the network 10. The network 10 includes an NG-RAN (Next Generation Radio Access Network) 20, which is a 5G radio access network, and a 5GC (5G Core Network) 30, which is a 5G core network.

The UE 100 is an example of a communication apparatus. The UE 100 may be a mobile radio communication apparatus. The UE 100 may be a communication apparatus that communicates via a base station 200. The UE 100 may be an apparatus used by a user. The UE 100 may be a user equipment specified in the 3GPP technical specification. The UE 100 is, for example, a mobile apparatus such as a mobile phone terminal such as a smartphone, a tablet terminal, a laptop PC, a communication module, or a communication card. The UE 100 may be a vehicle (for example, a car or a train) or an apparatus installed in a vehicle. The UE 100 may be a transport body other than a vehicle (for example, a ship or an airplane) or an apparatus installed in a transport body. The UE 100 may be a sensor or an apparatus installed in a sensor. It is noted that the UE 100 may be referred to as other names such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The NG-RAN 20 includes a plurality of base stations 200. Each of the base stations 200 manages at least one cell. A cell forms a minimum unit of a communication area. For example, one cell belongs to one frequency (carrier frequency) and is formed by one component carrier. The term "cell" may represent a radio communication resource, and may also represent a communication object of the UE 100. Each of the base stations 200 can perform radio communication with the UE 100 existing in its own cell. The base station 200 communicates with the UE 100 by using a protocol stack of RAN. The base station 200 provides NR user plane and control plane protocol terminations towards the UE 100 and is connected to a 5GC 30 via an NG interface. The base station 200 of NR may be referred to as a gNodeB (gNB).

The 5GC 30 includes a core network apparatus 300. The core network apparatus 300 includes, for example, an AMF (Access and Mobility Management Function) and/or a UPF (User Plane Function). The AMF performs mobility management of the UE 100. The UPF provides a feature specialized for user plane processing. The AMF and the UPF are connected to the base station 200 via the NG interface.

The 5GC 30 includes a position management apparatus 400. The position management apparatus 400 may manage support of a location service of the UE (target UE) 100. The position management apparatus 400 may manage overall alignment and scheduling of resources necessary for the location of the UE 100. The position management apparatus 400 may be referred to as a LMF (Location Management Function). The LMF is connected to an AMF via the NL1 interface. The NL1 interface is only used as a transport link for LTE (Long Term Evolution) positioning protocol (LPP) and NR positioning protocol A (NRPPa).

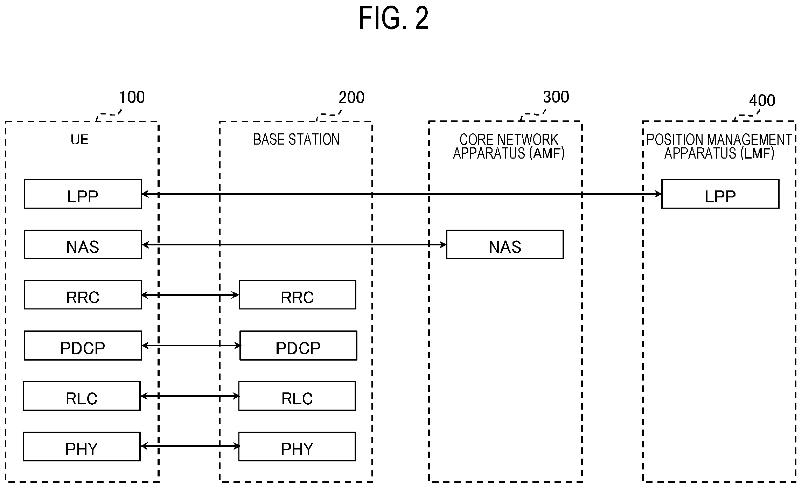

A configuration example of the protocol stack in the mobile communication system 1 according to the embodiment will be described with reference to Fig. 2.

A protocol of a radio section between the UE 100 and the base station 200 includes a physical (PHY) layer, an MAC (Medium Access Control) layer, an RLC (Radio Link Control) layer, a PDCP (Packet Data Convergence Protocol) layer, an RRC (Radio Resource Control) layer, and an LPP (LTE Positioning Protocol) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The physical channel includes a plurality of OFDM (Orthogonal Frequency Division Multiplexing) symbols in the time domain and a plurality of subcarriers in the frequency domain. One subframe includes a plurality of OFDM symbols in the time domain. A resource block is a resource allocation unit, and includes a plurality of OFDM symbols and a plurality of subcarriers. A frame can be composed of 10 ms, and can include 10 subframes composed of 1 ms. A number of slots corresponding to a subcarrier spacing may be included in the subframe.

Among the physical channels, a physical downlink control channel (PDCCH) plays a central role for purposes such as, for example, downlink scheduling allocation, uplink scheduling grant, and transmission power control.

In the NR, the UE 100 can use a bandwidth narrower than a system bandwidth (that is, the bandwidth of the cell). The base station 200 configures a bandwidth part (BWP) of consecutive PRBs in the UE 100. The UE 100 transmits and receives data and a control signal in an active BWP. In the UE 100, for example, a maximum of four BWPs can be configured. The BWPs may have different subcarrier spacings or may have frequencies overlapping each other. In a case in which a plurality of BWPs are configured in the UE 100, the base station 200 can designate which BWP is to be activated by control in downlink. Accordingly, the base station 200 can dynamically adjust a UE bandwidth according to the amount of data traffic of the UE 100 and the like, and can reduce the UE power consumption.

The base station 200 may configure, for example, a maximum of three control resource sets (CORESETs) in each of a maximum of four BWPs on a serving cell. The CORESET is a radio resource for control information to be received by the UE 100. A maximum of 12 CORESETs may be configured on the serving cell in the UE 100. Each CORESET has indices 0 to 11. For example, the CORESET includes 6 resource blocks (PRB) and one, two, or 3 consecutive OFDM symbols in the time domain.

The MAC layer performs priority control of data, retransmission processing by hybrid ARQ (Hybrid Automatic Repeat reQuest (HARQ)), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 200 via a logical channel.

The PDCP layer performs header compression and decompression and encryption and decryption.

An SDAP (Service Data Adaptation Protocol) layer may be provided as an upper layer of the PDCP layer. The SDAP (Service Data Adaptation Protocol) layer performs mapping between an IP flow that is a unit in which a core network performs QoS (Quality of Service) control, and a radio bearer that is a unit in which an AS (Access Stratum) performs QoS control.

The RRC layer controls the logical channel, the transport channel, and the physical channel in response to establishment, reestablishment, and release of the radio bearer. RRC signaling for various configurations is transmitted between the RRC layer of the UE 100 and the RRC layer of the base station 200. In a case in which there is an RRC connection between the RRC of the UE 100 and the RRC of the base station 200, the UE 100 is in an RRC connected state. In a case in which there is no RRC connection between the RRC of the UE 100 and the RRC of the base station 200, the UE 100 is in an RRC idle state. In a case in which an RRC connection between the RRC of the UE 100 and the RRC of the base station 200 is suspended, the UE 100 is in an RRC inactive state.

An NAS layer located above the RRC layer performs session management and mobility management of the UE 100. NAS signaling is transmitted between the NAS layer of the UE 100 and the NAS layer of the core network apparatus 300 (AMF).

The LPP layer positioned above the RRC layer performs exchange of positioning capabilities, transmission of assistance data, transmission of location information (positioning measurement and/or position estimation), error handling, aborting, and the like. LPP signaling (LPP message) is transmitted between the LPP layer of the UE 100 and the LPP layer of the position management apparatus 400 (LPP).

Note that the UE 100 has an application layer and the like in addition to the radio interface protocol.

### (Assumed Scenario)

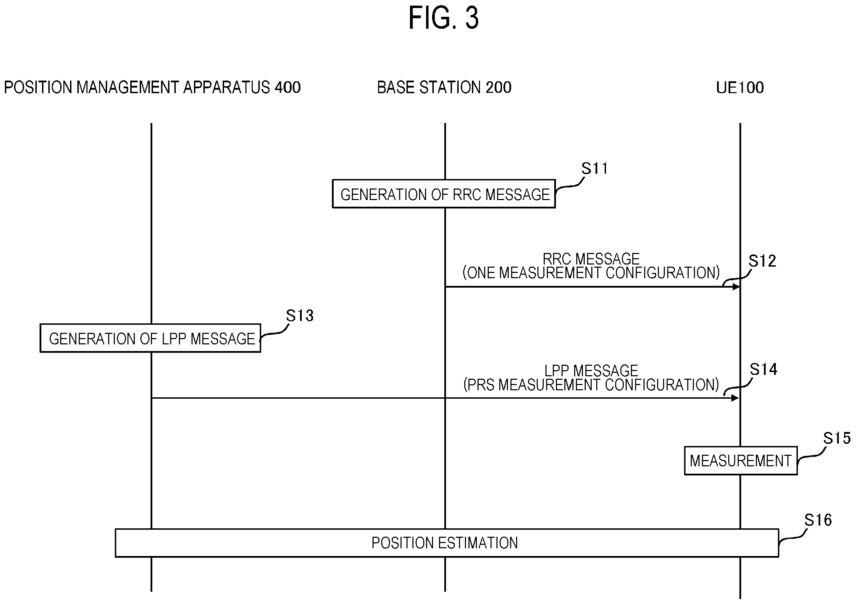

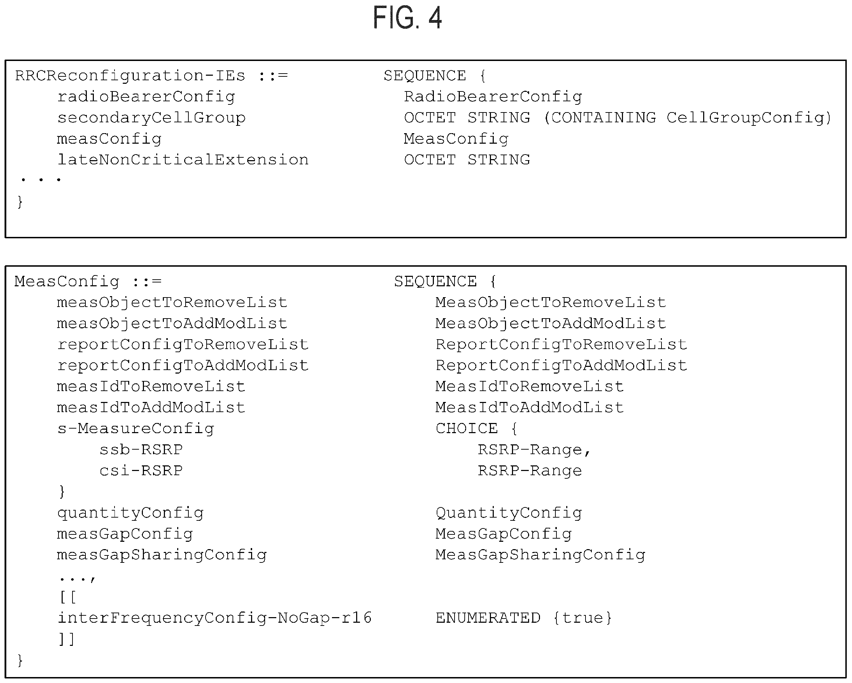

An assumed scenario in the mobile communication system 1 according to the embodiment will be described with reference to Figs. 3 and 4. Fig. 3 illustrates a sequence of an operation example in the existing 3GPP mobile communication system, that is, the mobile communication system according to the technical specification prior to Release 16. Note that the UE 100 is in the RRC connected state. The UE 100 performs communication with the base station 200 in the serving cell managed by the base station 200.

As illustrated in Fig. 3, in step S11, the base station 200 generates a radio resource control (RRC) message. The RRC message is, for example, an RRC reconfiguration message, an RRC resume message, or the like. Hereinafter, the RRC reconfiguration message will be described as an example. The RRC reconfiguration message is a command for changing the RRC connection.

As illustrated in Fig. 4, the RRC message (for example, RRCReconfiguration) includes a measurement configuration (for example, MeasConfig) that designates measurement to be performed by the UE 100. The measurement configuration includes a list of measurement objects to be added and/or changed (for example, MeasObjectToAddModList), a list of measurement report configurations to be added and/or changed (for example, ReportConfigToAddModList), a list of measurement identifiers to be added and/or changed (for example, MeasIdToAddModList), and a measurement gap configuration (for example, MeasGapConfig). In addition, the measurement configuration may include a list of measurement objects to be deleted (for example, MeasObjectToRemoveList), a list of measurement report configurations to be deleted (for example, ReportConfigToRemoveList), and a list of measurement identifiers to be deleted (for example, MeasIdToRemoveList).

The list of measurement objects (for example, MeasObjectToAddModList) may include a plurality of measurement object configurations (for example, MeasObjectToAddMod) that designate the measurement objects. The measurement object configuration includes a set of a measurement object identifier (MeasObjectId) and measurement object information (for example, measObject). The measurement object identifier is used to identify the measurement object configuration. The measurement object information may be, for example, information that designates a frequency, a reference signal, and the like. The reference signal may be at least one of a synchronization signal and physical broadcast channel block (SSB) constituted by a primary synchronization signal (hereinafter, PSS), a secondary synchronization signal (hereinafter, SSS), and a physical broadcast channel (PBCH), a channel state information reference signal (CSI-RS), and a positioning reference signal (PRS). The measurement object includes, for example, a measurement object (for example, MeasObjectNR) that designates information applicable to SS/PBCH block intra-frequency/inter-frequency measurement and/or CSI-RS intra-frequency/inter-frequency measurement.

The list of measurement report configurations (for example, ReportConfigToAddModList) may include a plurality of measurement report configurations (for example, ReportConfigToAddMod). The measurement report configuration includes a set of a reporting configuration identifier (for example, ReportConfigId) and a measurement report configuration (for example, reportConfig). The reporting configuration identifier is used to identify a measurement reporting configuration. The measurement report configuration may designate a criterion that triggers reporting of a measurement result.

The list of measurement identifiers (for example, MeasIdToAddModList) includes a set of a measurement identifier, a measurement object identifier, and a report configuration identifier (for example, MeasIdToAddMod). Therefore, the measurement identifier is associated with a combination of the measurement object configuration and the measurement report configuration via the measurement object identifier and the report configuration identifier.

The measurement gap configuration (for example, MeasGapConfig) is used to set up and release the gap pattern (for example, the measurement gap). The gap pattern is constituted by a measurement gap capable of interrupting communication. The measurement gap configuration includes gapOffset, mgl, mgrp, and mgta. mgl is a measurement gap length (measurement gap length) of the measurement gap. mgrp is a measurement gap repetition period (MGRP) of the measurement gap. mgta is measurement gap timing advance (measurement gap timing advance). gapOffset is a gap offset of a gap pattern with MGRP.

In step S12, the base station 200 transmits a generated RRC message to the UE 100. The UE 100 receives the RRC message. The UE 100 performs a configuration based on the measurement configuration included in the RRC message.

In step S 13, the position management apparatus 400 generates an LPP message. The LPP message may include a configuration (hereinafter, referred to as PRS configuration) related to a positioning reference signal (PRS). The PRS configuration may include, for example, a configuration related to a downlink positioning reference signal (DL-PRS) or a configuration related to a sidelink positioning reference signal (SL-PRS). The PRS configuration may include, for example, information indicating time/frequency resources used to measure the PRS. Note that the SL-PRS is a reference signal transmitted and received between communication apparatuses (user equipments).

In step S14, the position management apparatus 400 transmits the LPP message including the PRS configuration to the UE 100. The UE 100 receives the LPP message from the position management apparatus 400. The LPP message may be transmitted from the position management apparatus 400 to the UE 100 on the basis of a request from the UE 100.

The UE 100 and the position management apparatus 400 perform communication (transmission and/or reception) via the base station 200 (cell) and the AMF, but a description that communication between the UE 100 and the position management apparatus 400 is communication via the base station 200 (cell) and the AMF may be omitted below.

In step S14, the UE 100 performs measurement on the measurement object. Specifically, the UE 100 performs measurement on the measurement object configured on the basis of the measurement object configuration during the measurement gap configured on the basis of the measurement gap configuration. In addition, the UE 100 performs measurement on the PRS on the basis of the PRS configuration during the measurement gap configured on the basis of the measurement gap configuration.

In step S15, the position of the UE 100 is estimated on the basis of the measurement result for the PRS. For example, in a multi-round trip time (RTT) positioning method, the position of the UE 100 is estimated on the basis of a transmission/reception time difference (Rx-Tx time difference) between the DL-PRS measured by the UE 100 and the UL sounding reference signals (UL-SRS) measured by a plurality of transmission/reception points (the base station 200). In addition, in a downlink Angle-of-Departure (DL-AoD) positioning method, the position of the UE 100 is estimated on the basis of measured values of received power (specifically, reference signal received power (RSRP)) of the DL-PRS from a plurality of transmission/reception points (the base station 200) and knowledge of spatial information of the DL-PRS (downlink radio signal) and geographic coordinates of a plurality of transmission/reception points.

The UE 100 may transmit the measurement report to the base station 200. The base station 200 may receive the measurement report from the UE 100. The UE 100 may transmit the measurement report to the base station 200 in a case in which the measurement report is triggered on the basis of the measurement report configuration.

In recent years, there has been discussed a method of configuring a plurality of gap patterns in the UE 100 so that measurement can be performed on each measurement object with an optimal gap pattern even in a case in which there are a plurality of measurement objects to be measured by the UE 100.

However, in the current 3GPP technical specification, while a plurality of measurement objects can be configured in the UE 100, only one gap pattern can be configured in the UE 100. Therefore, it is likely that it is difficult to perform appropriate measurement in a case in which a plurality of gap patterns are configured in the UE 100. In addition, the gap pattern configured on the basis of the measurement gap configuration included in the RRC message is used to measure the PRS. However, in a case in which a plurality of gap patterns are configured in the UE 100, it is likely that the UE 100 is unable to detect the gap pattern to be used to measure the PRS and to perform appropriate measurement. An embodiment to be described later with an operation for enabling appropriate measurement in a case in which a plurality of gap patterns are configured.

### (Configuration of User Equipment)

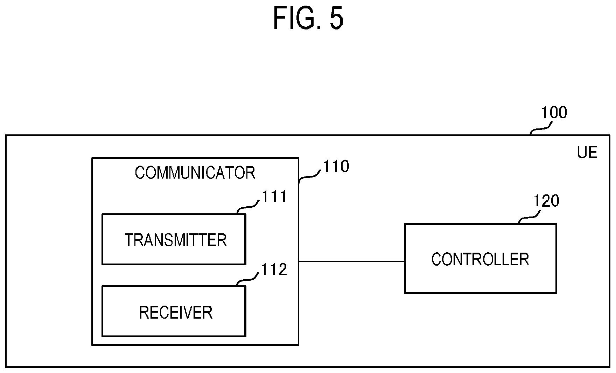

A configuration of the UE 100 according to an embodiment will be described with reference to Fig. 5. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and RF circuits. The antenna converts a signal into a radio wave and emits the radio wave into space. Further, the antenna receives a radio wave in space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described later may be an operation under the control of the controller 120. The controller 120 may include at least one processor capable of executing a program and a memory that stores the program. The processor may execute the program to perform the operation of the controller 120. The controller 120 may include a digital signal processor that executes digital processing of the signal transmitted and received via the antenna and the RF circuit. The digital processing includes processing of the protocol stack of the RAN. Further, the memory stores a program executed by the processor, parameters related to the program, and data related to the program. The memory may include at least one of an ROM (Read Only Memory), an EPROM (Erasable Programmable Read Only Memory), an EEPROM (Electrically Erasable Programmable Read Only Memory), an RAM (Random Access Memory), and a flash memory. All or part of the memory may be included in the processor.

The UE 100 configured as described above performs communication with the base station 200. In the UE 100, the communicator 110 receives, from the base station 200, a radio resource control (RRC) message including a plurality of measurement gap configurations for configuring a plurality of gap patterns constituted by the measurement gaps capable of interrupting communication. The controller 120 measures the positioning reference signal during the measurement gap configured on the basis of a plurality of measurement gap configurations. The RRC message includes identification information indicating whether each of a plurality of measurement gap configurations is for measurement of the PRS. Accordingly, the UE 100 (the controller 120) can determine whether or not each of a plurality of measurement gap configurations is for measurement of the PRS on the basis of the identification information. Therefore, even though a plurality of gap patterns are configured, the UE 100 (the controller 120) can determine the gap pattern to be used to measure the PRS. Furthermore, the base station 200 (the controller 230) can appropriately control the gap pattern which is used for measurement by the UE 100. As a result, in a case in which a plurality of gap patterns are configured, appropriate measurement can be performed.

### (Configuration of Base Station)

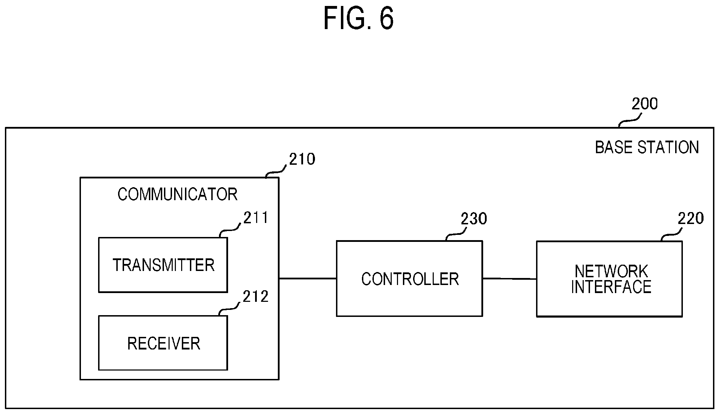

A configuration of the base station 200 according to an embodiment will be described with reference to Fig. 6. The base station 200 includes a communicator 210, a network interface 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network interface 220 transmits and receives a signal to and from a network. The network interface 220 receives, for example, a signal from a neighboring base station connected via an Xn interface, which is an interface between base stations, and transmits the signal to the neighboring base station. In addition, the network interface 220 receives a signal from the core network apparatus 300 connected via the NG interface, for example, and transmits a signal to the core network apparatus 300.

The controller 230 performs various types of control in the base station 200. The controller 230 controls, for example, communication with the UE 100 via the communicator 210. Furthermore, the controller 230 controls, for example, communication with a node (for example, the neighboring base station and the core network apparatus 300) via the network interface 220. The operation of the base station 200 described above and described later may be an operation under the control of the controller 230. The controller 230 may include at least one processor capable of executing a program and a memory that stores the program. The processor may execute the program to perform the operation of the controller 230. The controller 230 may include a digital signal processor that executes digital processing of a signal transmitted and received via the antenna and the RF circuit. The digital processing includes processing of the protocol stack of the RAN. Further, the memory stores a program executed by the processor, parameters related to the program, and data related to the program. All or part of the memory may be included in the processor.

The base station 200 configured as described above performs communication with the UE 100. In the base station 200, the controller 230 generates a radio resource control (RRC) message including a plurality of measurement gap configurations for configuring a plurality of gap patterns constituted by the measurement gaps capable of interrupting communication. The communicator 210 transmits the RRC message to the UE 100. The RRC message includes identification information indicating whether each of a plurality of measurement gap configurations is for measurement of the PRS. Accordingly, the UE 100 (the controller 120) can determine whether or not each of a plurality of measurement gap configurations is for measurement of the PRS on the basis of the identification information. Therefore, even though a plurality of gap patterns are configured, the UE 100 (the controller 120) can determine the gap pattern to be used to measure the PRS. Furthermore, the base station 200 (the controller 230) can appropriately control the gap pattern which is used for measurement by the UE 100. As a result, in a case in which a plurality of gap patterns are configured, appropriate measurement can be performed.

### (Operation of Mobile Communication System)

### (1-1) First Operation Example

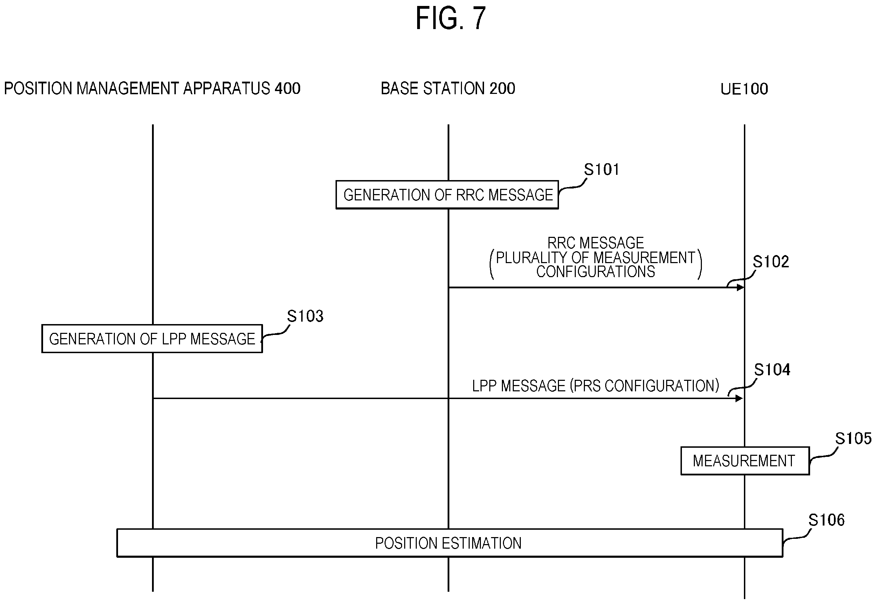

A first operation example of the mobile communication system 1 will be described with reference to Figs. 7 to 9. Note that differences from the above description will be mainly described.

As illustrated in Fig. 7, in step S101, the base station 200 (the controller 230) generates the RRC message. The RRC message includes a plurality of measurement gap configurations. In the RRC message, each of a plurality of measurement gap configurations is associated with at least one measurement identifier associated with a combination of the measurement object configuration and the measurement report configuration.

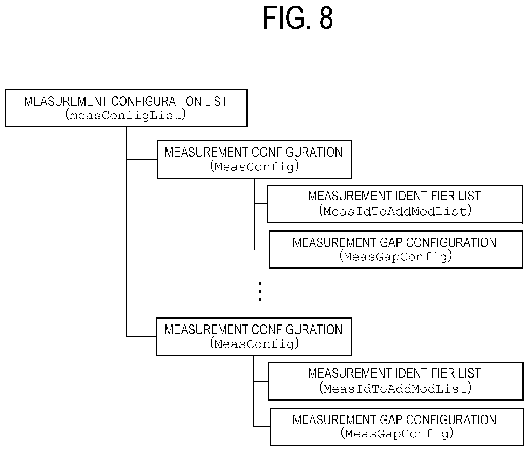

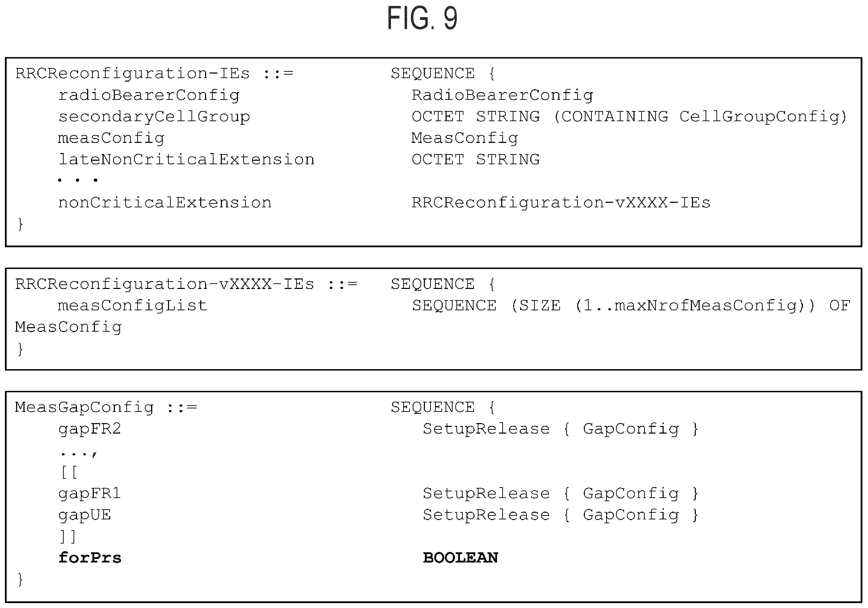

In the present operation example, the RRC message includes a plurality of measurement configurations. Each of a plurality of measurement configurations includes one measurement gap configuration and at least one measurement identifier associated with the measurement gap configuration. As illustrated in Figs. 8 and 9, each of a plurality of measurement configurations includes a set of one measurement gap configuration and a list of measurement identifiers. Accordingly, one measurement gap configuration is associated with each measurement identifier in the list of measurement identifiers associated with the measurement gap configuration.

As illustrated in Fig. 9, the RRC message may include an existing measurement configuration (MeasConfig), separately from the list of measurement configurations (measConfigList). The existing measurement configuration may be dealt as one of a plurality of measurement configurations. The measurement configurations in the list of measurement configurations may be dealt as a second or subsequent measurement configuration. Alternatively, the existing measurement configuration may become unavailable in a case in which a list of measurement configurations is included in the RRC message. In addition, the existing measurement configuration may be used only in a case in which the UE 100 does not support the configuration of a plurality of gap patterns. In a case in which the UE 100 supports the configuration of a plurality of gap patterns, the existing measurement configuration may become unavailable.

As illustrated in Fig. 9, the RRC message includes the identification information indicating whether each of a plurality of measurement gap configurations is for measurement of the PRS (forPrs). In this operation example, each measurement gap configuration (MeasGapConfig) includes the identification information. Accordingly, in the RRC message, each of a plurality of measurement gap configurations is associated with the identification information. The identification information indicates whether or not the associated measurement gap configuration is for measurement of the PRS. The identification information may be, for example, a Boolean-type flag. Note that the identification information may be indicated by any other than "forPrs."

In step S102, the base station 200 (the controller 230) transmits the RRC message to the UE 100. The UE 100 (the receiver 112) receives the RRC message from the base station 200. The UE 100 (the communicator 110) performs configurations on the basis of a plurality of measurement configurations.

Steps S103 and S104 are similar to steps S13 and S14.

In step S105, the UE 100 (the controller 120) performs measurement on the measurement object. Specifically, the UE 100 (the controller 120) performs measurement on the measurement object configured on the basis of the measurement object configuration during the measurement gap configured on the basis of a plurality of measurement gap configurations. The UE 100 (the controller 120) configures a plurality of gap patterns on the basis of a plurality of measurement gap configurations. Specifically, in a case in which measurement is performed on a designated measurement object, the UE 100 (the controller 120) performs the measurement with the gap pattern based on the measurement gap configuration associated with the measurement identifier associated with the designated measurement object. That is, in a case in which measurement on the measurement object based on the measurement object configuration included in any one of a plurality of measurement configurations is performed, the UE 100 (the controller 120) performs the measurement during the measurement gap according to the gap pattern based on one measurement gap configuration in the measurement configuration.

Further, the UE 100 (the controller 120) determines whether or not each of a plurality of measurement gap configurations is for measurement of the PRS. In a case in which the identification information indicates that the measurement gap configuration is for measurement of the PRS, the UE 100 (the controller 120) determines that the measurement gap configuration associated with the identification information is for measurement of the PRS. In a case in which it is determined that the measurement gap configuration is for measurement of the PRS, the UE 100 (the controller 120) performs measurement on the PRS on the basis of the PRS configuration during the measurement gap of the gap pattern configured based on the measurement gap configuration.

Step S 106 is similar to step S 16.

As described above, in the RRC message, each of a plurality of measurement gap configurations is associated with at least one measurement identifier. Accordingly, the UE 100 (the controller 120) can perform the measurement based on the measurement object configuration associated with at least one measurement identifier during the measurement gap constituting the gap pattern based on the measurement gap configuration associated with the measurement identifier. Therefore, even though a plurality of gap patterns are configured, the UE 100 (the controller 120) can determine the gap pattern to be used for measurement and a type of measurement. Furthermore, the base station 200 (the controller 230) can appropriately control the gap pattern which is used for measurement by the UE 100. As a result, in a case in which a plurality of gap patterns are configured, appropriate measurement can be performed.

Further, the RRC message includes a plurality of measurement configurations. Each of a plurality of measurement configurations includes one measurement gap configuration and at least one measurement identifier associated with the measurement gap configuration. Accordingly, in each measurement configuration, the measurement gap configuration is associated with the measurement object via the measurement identifier, and thus the information structure in the measurement configuration is similar to that of the existing measurement configuration. Therefore, since only a change of making a list of measurement configurations is required, the influence on the technical specification can be reduced as compared with the case of changing the information structure in the measurement configurations.

In addition, the base station (the controller 230) generates an RRC message including a plurality of measurement gap configurations. The base station (the communicator 210) transmits the RRC message to the UE 100. The UE 100 (the communicator 110) receives the RRC message from the base station 200. The UE 100 (the controller 120) performs the measurement on the PRS during the measurement gap configured on the basis of a plurality of measurement gap configurations. The RRC message includes identification information indicating whether each of a plurality of measurement gap configurations is for measurement of the PRS. Accordingly, the UE 100 (the controller 120) can determine whether or not each of a plurality of measurement gap configurations is for measurement of the PRS on the basis of the identification information. Therefore, even though a plurality of gap patterns are configured, the UE 100 (the controller 120) can determine the gap pattern to be used to measure the PRS. Furthermore, the base station 200 (the controller 230) can appropriately control the gap pattern which is used for measurement by the UE 100. As a result, in a case in which a plurality of gap patterns are configured, appropriate measurement can be performed.

Further, in the RRC message, each of a plurality of measurement gap configurations may be associated with the identification information. Accordingly, the UE 100 (the controller 120) can determine whether or not an associated measurement gap configuration is for measurement of the PRS on the basis of each piece of identification information.

### (1-2) First Modification Example of First Operation Example

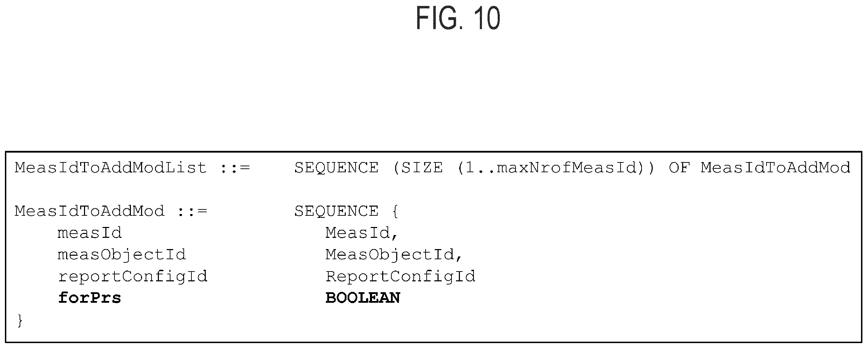

A first modification example of the first operation example will be described with reference to Fig. 10, focusing on differences from the above-described operation example.

The RRC message includes a set of a measurement identifier and identification information. Specifically, as illustrated in Fig. 10, the list of measurement identifiers (MeasIdToAddModList) included in the RRC message includes a set of measurement identifier (MeasId) and identification information (forPrs).

Since the measurement identifier and the measurement gap configuration in the list of measurement identifiers included in the same measurement configuration are associated with each other, each measurement gap configuration is associated with the identification information via the measurement identifier. In addition, the measurement gap configuration and the identification information included in the same measurement configuration are associated with each other. The UE 100 (the controller 120) can determine whether or not an associated measurement gap configuration is for measurement of the PRS on the basis of each piece of identification information. Therefore, even though a plurality of gap patterns are configured, the UE 100 (the controller 120) can determine the gap pattern to be used to measure the PRS.

Further, in a case in which the identification information indicates that an associated measurement gap configuration is for measurement of the PRS, the UE 100 (the controller 120) may ignore fields (for example, the field of the measurement object identifier and the field of the report configuration identifier) other than the measurement gap configuration. In addition, in a case in which the identification information indicates that an associated measurement gap configuration is for measurement of the PRS, a dummy value may be input in the fields of the measurement object identifier and the report configuration identifier in the same set as the identification information. Accordingly, the UE 100 (the controller 120) can avoid performing measurement and reporting of the measurement object other than the PRS in the gap pattern for measurement of the PRS.

### (1-3) Second Modification Example of First Operation Example

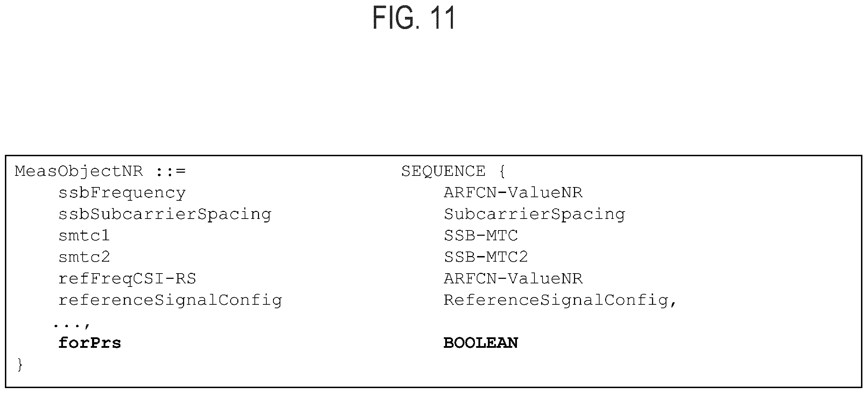

A second modification example of the first operation example will be described with reference to Fig. 11, focusing on differences from the above-described operation examples.

As illustrated in Fig. 11, the measurement object configuration (MeasObjectNR) includes the identification information (forPrs). As described above, in the RRC message, each of a plurality of measurement gap configurations is associated with the measurement object configuration. Specifically, the measurement gap configuration and the measurement object configuration included in the same measurement configuration are associated with each other. In addition, the measurement gap configuration and the identification information included in the same measurement configuration are associated with each other. The UE 100 (the controller 120) can determine whether or not an associated measurement gap configuration is for measurement of the PRS on the basis of each piece of identification information. Therefore, even though a plurality of gap patterns are configured, the UE 100 (the controller 120) can determine the gap pattern to be used to measure the PRS.

Further, in a case in which the identification information indicates that an associated measurement gap configuration is for measurement of the PRS, the UE 100 (the controller 120) may ignore fields (for example, the fields of the measurement object information (ssbFrequency, ssbSubcarrierSpacing, smtc1, smtc2, refFreqCSI-RS, reference Signal Config, and the like)) other than the measurement gap configuration. In addition, in a case in which the identification information indicates that an associated measurement gap configuration is for measurement of the PRS, a dummy value may be input in a field of an essential information element in the measurement object configuration (MeasObjectNR) including the identification information. A field of a non-essential (optional) information element in the measurement object configuration (MeasObjectNR) may be omitted. Accordingly, the UE 100 (the controller 120) can avoid performing measurement and reporting of the measurement object other than the PRS in the gap pattern for measurement of the PRS.

### (1-4) Third Modification Example of First Operation Example

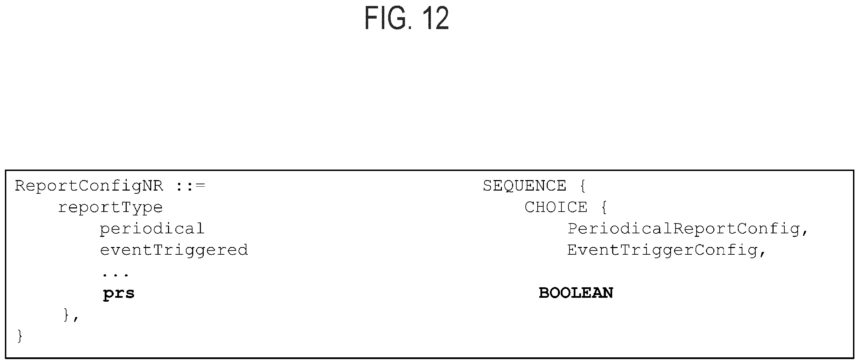

A third modification example of the first operation example will be described with reference to Fig. 12, focusing on differences from the above-described operation examples.

As illustrated in Fig. 12, the measurement report configuration (ReportConfigNR) includes the identification information (prs). As described above, in the RRC message, each of a plurality of measurement gap configurations is associated with the measurement report configuration. Specifically, the measurement gap configuration and the measurement report configuration included in the same measurement configuration are associated with each other. In addition, the measurement gap configuration and the identification information included in the same measurement configuration are associated with each other. In this operation example, a type "prs" may be defined as a type of report type (reportType) indicating a type of measurement report configuration. In a case in which the identification information (prs) in the report type (reportType) indicates that the measurement gap configuration is for measurement of the PRS, the UE 100 (the controller 120) determines that the measurement gap configuration associated with the measurement report configuration including the report type is for measurement of the PRS. The UE 100 (the controller 120) can determine whether or not an associated measurement gap configuration is for measurement of the PRS on the basis of each piece of identification information. Therefore, even though a plurality of gap patterns are configured, the UE 100 (the controller 120) can determine the gap pattern to be used to measure the PRS.

Further, the measurement report configuration (ReportConfigNR) may include the identification information (forPrs) outside the report type instead of including the identification information (prs) in the report type.

### (1-5) Fourth Modification Example of First Operation Example

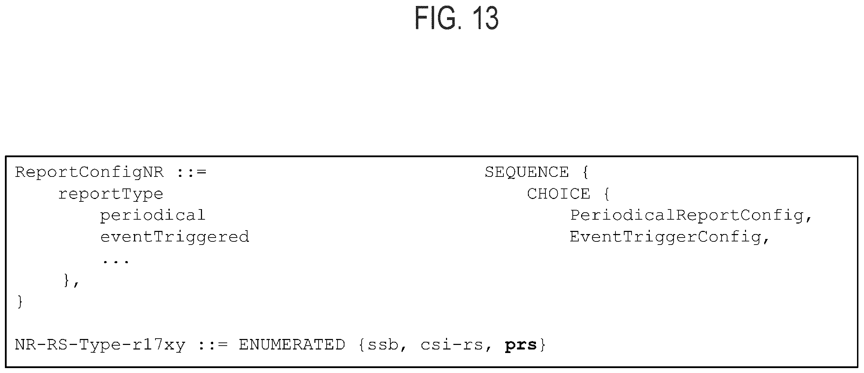

A fourth modification example of the first operation example will be described with reference to Fig. 13, focusing on differences from the above-described operation examples.

As illustrated in Fig. 13, the identification information (NR-RS-Type-r17 xy) may be an enumeration (ENUM)-type flag. The identification information may indicate, for example, a reference signal serving as an object of the measurement report. The identification information may indicate, for example, any of SSB, CSI-RS, and PRS. Accordingly, even in a case in which the reference signal serving as the object of the measurement report is added by the identification information, the technical specification can be easily extended.

In a case in which the identification information indicates the PRS, the UE 100 (the controller 120) can determine that an associated measurement gap configuration is for measurement of the PRS. In a case in which the identification information indicates the reference signal (SSB or CSI-RS) other than the PRS, the UE 100 (the controller 120) can determine that an associated measurement gap configuration is not for measurement of the PRS.

### (2-1) Second Operation Example

The present operation example will be described with reference to Fig. 7 and Figs. 14 to 16, focusing on differences from the above-described operation examples. In the present operation example, in the RRC message, each of a plurality of measurement gap configurations is associated with the measurement gap identifier.

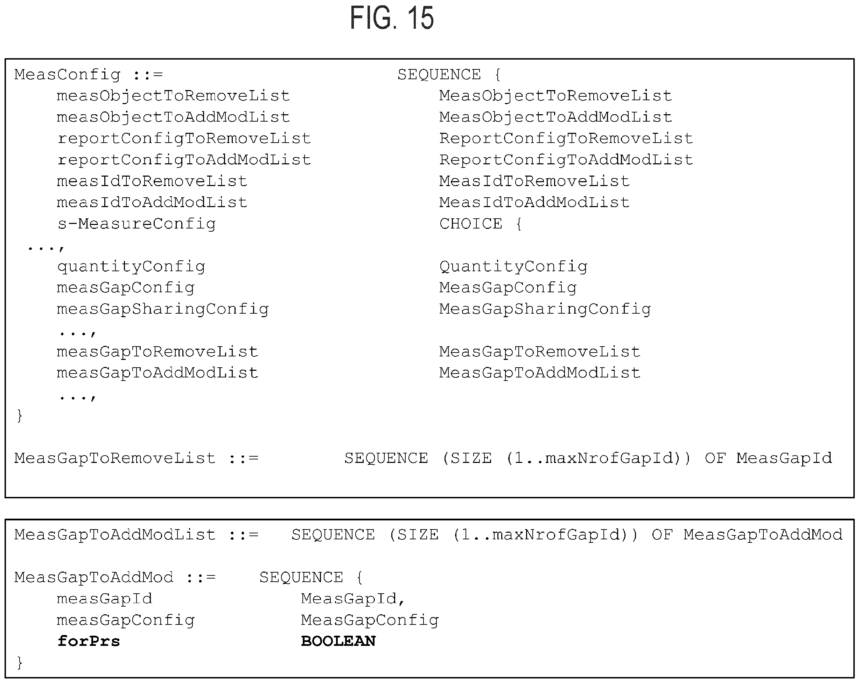

In step S101, the base station 200 (the controller 230) generates the RRC message, similarly to the above-described operation examples. As illustrated in Fig. 15, the measurement configuration (MeasConfig) included in the RRC message includes a list (MeasGapToAddModList) of measurement gap configurations to be added and/or changed. The measurement configuration may include a list of measurement gap identifiers (MeasGapToRemoveList) to be deleted.

The list of measurement gap configurations (MeasGapToAddModList) includes a set (MeasGapToAddMod) of measurement gap identifier (MeasGapId) and a plurality of measurement gap configurations (MeasGapConfig). The measurement gap identifier is used to identify the measurement gap configuration. As described above, each of a plurality of measurement gap configurations is associated with the measurement gap identifier.

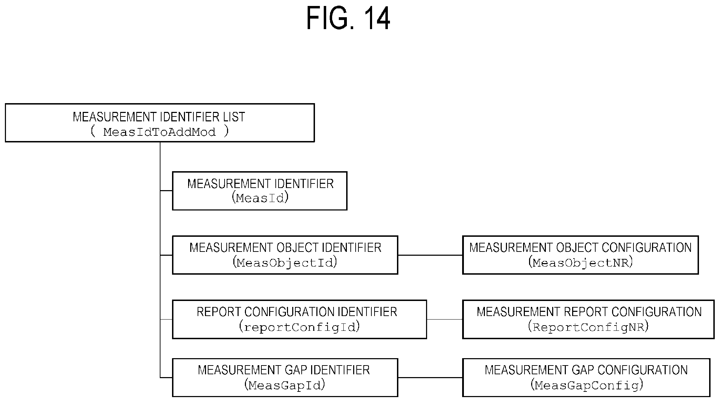

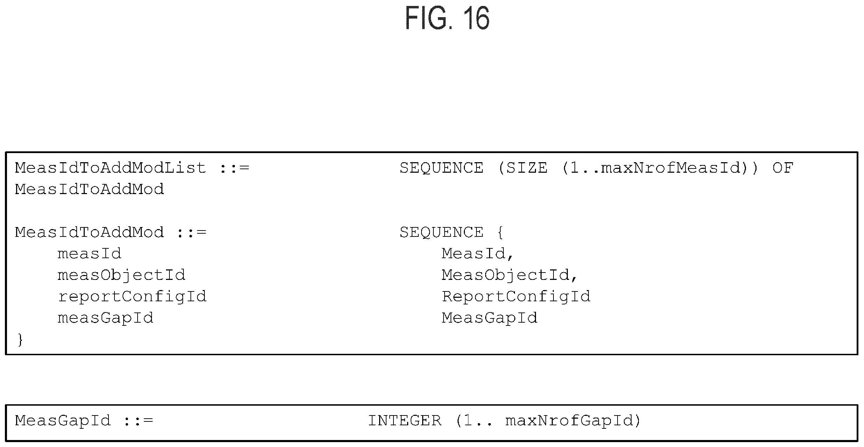

The RRC message includes a set of measurement identifier and measurement gap identifier. As illustrated in Figs. 14 and 16, in the present operation example, the list of measurement identifies (MeasIdToAddMod) includes a set (MeasIdToAddMod) of measurement identifier (MeasId) and measurement gap identifier (MeasGapId). The set further includes the measurement object identifier (MeasObjectId) and the report configuration identifier (reportConfigId). Accordingly, the measurement gap identifier is associated with the measurement identifier. As a result, each of a plurality of measurement configurations is associated with the measurement identifier via the measurement gap identifier.

As illustrated in Fig. 15, the measurement configuration may include an existing measurement gap configuration (MeasGapConfig), separately from the list of measurement gap configurations. The existing measurement gap configuration may be dealt as one of a plurality of measurement gap configurations. The measurement gap configurations in the list of measurement gap configurations may be dealt as a second or subsequent measurement gap configuration. Alternatively, the existing measurement gap configuration may become unavailable in a case in which a list of measurement gap configurations is included in the RRC message. In addition, the existing measurement gap configuration may be used only in a case in which the UE 100 does not support the configuration of a plurality of gap patterns. In a case in which the UE 100 supports the configuration of a plurality of gap patterns, the existing measurement gap configuration may become unavailable.

Further, the base station 200 associates the measurement gap configuration with the measurement identifier such that each frequency layer is associated with only one gap pattern. Further, in a case in which the reference signals (for example, SSB, CSI-RS, PRS) serving as the measurement object are different even in the same frequency layer, the reference signals may be dealt as different frequency layers.

As illustrated in Fig. 15, the RRC message may include a set (MeasGapToAddMod) of each of a plurality of measurement gap configurations (measGapConfig) and identification information (forPrs). Specifically, the set (MeasGapToAddMod) includes the measurement gap identifier (MeasGapId), the measurement gap configuration (MeasGapConfig), and the identification information. Accordingly, each of a plurality of measurement gap configurations is associated with the identification information.

Steps S 102 to S 104 are similar to those in the above-described operation examples.

Step S 105 is similar to that in the above-described operation example. The UE 100 (the controller 120) performs measurement on the measurement object based on the measurement object configuration associated with the same measurement identifier via the measurement object identifier during the measurement gap constituting the gap pattern based on the measurement gap configuration associated with the measurement identifier in one set (MeasIdToAddMod) via the measurement gap identifier.

In a case in which the identification information indicates that an associated measurement gap configuration is for measurement of the PRS, the UE 100 (the controller 120) determines that the measurement gap configuration in the same set as the identification information is for measurement of the PRS. In this case, the UE 100 (the controller 120) performs measurement on the PRS on the basis of the PRS configuration during the measurement gap of the gap pattern configured based on the measurement gap configuration.

Step S 106 is similar to that in the above-described operation example.

As described above, in the RRC message, each of a plurality of measurement gap configurations may be associated with the measurement gap identifier. The measurement gap identifier may be associated with the measurement identifier. Accordingly, a plurality of measurement configurations need not to be included in the RRC message. Therefore, a plurality of redundant parameters need not to be included in the measurement configuration, and thus a decrease in signaling efficiency can be suppressed.

Further, the RRC message may include a set of measurement identifier and measurement gap identifier. Accordingly, the UE 100 (the controller 120) associates each of a plurality of measurement gap configurations with the measurement identifier via the measurement gap identifier. Therefore, even though a plurality of gap patterns are configured, the UE 100 can determine the gap pattern to be used for measurement and a type of measurement. Further, the base station 200 can appropriately control the gap pattern which is used for measurement by the UE 100. As a result, in a case in which a plurality of gap patterns are configured, appropriate measurement can be performed.

### (2-2) Modification Example of Second Operation Example

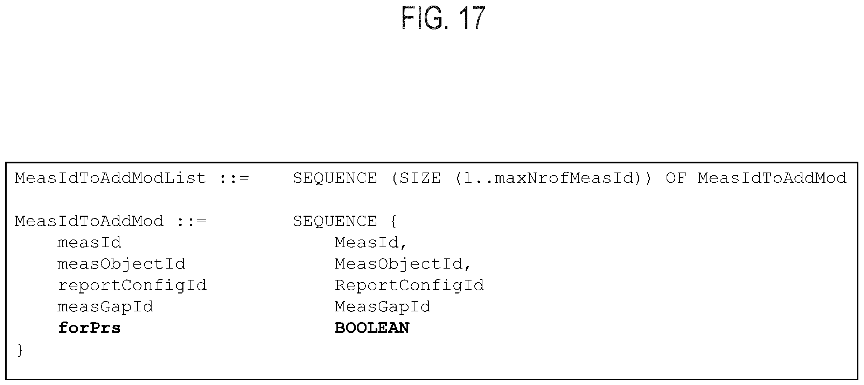

A modification example of the second operation example will be described with reference to Fig. 17, focusing on differences from the above-described operation examples.

As illustrated in Fig. 17, the RRC message may include a set of measurement identifier and identification information. Specifically, the list of measurement identifiers (MeasIdToAddModList) included in the RRC message includes a set (MeasIdToAddMod) of measurement identifier (measId) and identification information (forPrs). The set further includes a measurement object identifier (measObjectId), a reporting configuration identifier (reportConfigId), and a measurement gap identifier (measGapId).

Since the measurement identifier and the identification information in the same set are associated with each other, each measurement gap configuration is associated with the identification information via the measurement identifier. Further, since the measurement gap identifier and the identification information in the same set are associated with each other, each measurement gap configuration is associated with the identification information via the measurement gap identifier. The UE 100 (the controller 120) can determine whether or not an associated measurement gap configuration is for measurement of the PRS on the basis of each piece of identification information. Therefore, even though a plurality of gap patterns are configured, the UE 100 (the controller 120) can determine the gap pattern to be used to measure the PRS.

### (3) Third Operation Example

A third operation example will be described with reference to Figs. 7, 18, and 19, focusing on differences from the above-described operation examples. In the third operation example, each of a plurality of measurement report configurations includes the measurement gap identifier.

In step S101, the base station 200 (the controller 230) generates the RRC message, similarly to the above-described operation examples. The RRC message includes a plurality of measurement report configurations constituted by the measurement report configurations. Specifically, the measurement configuration (MeasConfig) in the RRC message includes a list of measurement report configurations (ReportConfigToAddModList). In addition, the RRC message includes a list of measurement gap configurations (MeasGapToAddModList), similarly to the second operation example.

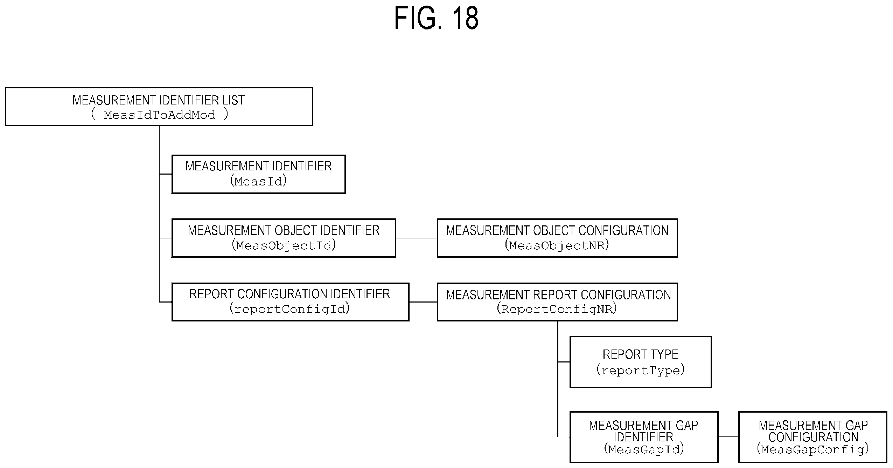

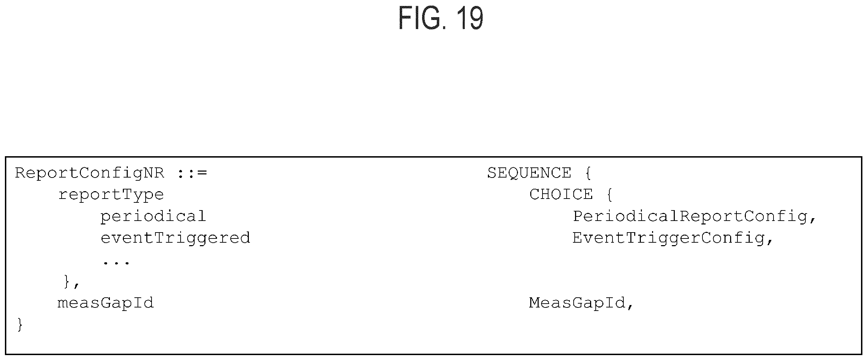

As illustrated in Figs. 18 and 19, each of a plurality of measurement report configurations includes the measurement gap identifier. Specifically, the measurement report configuration includes a set of report type (reportType) indicating a type of measurement report configuration and measurement gap identifier (MeasGapId). Accordingly, the measurement gap identifier is associated with the measurement identifier via the measurement report identifier associated with the measurement report configuration including the measurement gap identifier. As a result, each of a plurality of measurement configurations is associated with the measurement identifier via the measurement gap identifier.

Further, the identification information may be included in the RRC message, similarly to any of the described above operation examples. The identification information may be associated with the measurement gap configuration such that it is included in the same set as the measurement gap configuration, or may be associated with the measurement gap configuration via at least one of the measurement identifier, the measurement object identifier, the reporting configuration identifier, and the measurement gap identifier.

Steps S 102 to S 104 are similar to those in the above-described operation examples.

Step S 105 is similar to that in the above-described operation example. The UE 100 (the controller 120) performs measurement on the measurement object based on the measurement object configuration associated with the same measurement identifier via the measurement object identifier during the measurement gap constituting the gap pattern based on the measurement gap configuration associated with the measurement identifier via the report configuration identifier and the measurement gap identifier. Similarly, in a case in which it is determined that the measurement gap configuration in the same set as the identification information is for measurement of the PRS, the UE 100 (the controller 120) performs measurement on the PRS on the basis of the PRS configuration during the measurement gap of the gap pattern configured based on the measurement gap configuration.

Step S 106 is similar to that in the above-described operation example.

As described above, the RRC message may include a plurality of measurement report configurations constituted by the measurement report configurations. Each of a plurality of measurement report configurations may include the measurement gap identifier. Each of a plurality of measurement gap configurations is associated with the measurement identifier via the reporting configuration identifier and the measurement gap identifier. Therefore, even though a plurality of gap patterns are configured, the UE 100 can determine the gap pattern to be used for measurement and a type of measurement. Further, the base station 200 can appropriately control the gap pattern which is used for measurement by the UE 100. As a result, in a case in which a plurality of gap patterns are configured, appropriate measurement can be performed.

### (4) Fourth Operation Example

A fourth operation example will be described with reference to Figs. 7, 20, and 21, focusing on differences from the above-described operation examples. In the fourth operation example, each of a plurality of measurement object configurations includes the measurement gap identifier.

In step S101, the base station 200 (the controller 230) generates the RRC message, similarly to the above-described operation examples. The RRC message includes a plurality of measurement object configurations constituted by the measurement object configurations. Specifically, the measurement configuration (MeasConfig) in the RRC message includes a list of measurement objects (MeasObjectToAddModList). In addition, the RRC message includes a list of measurement gap configurations (MeasGapToAddModList), similarly to the second operation example.

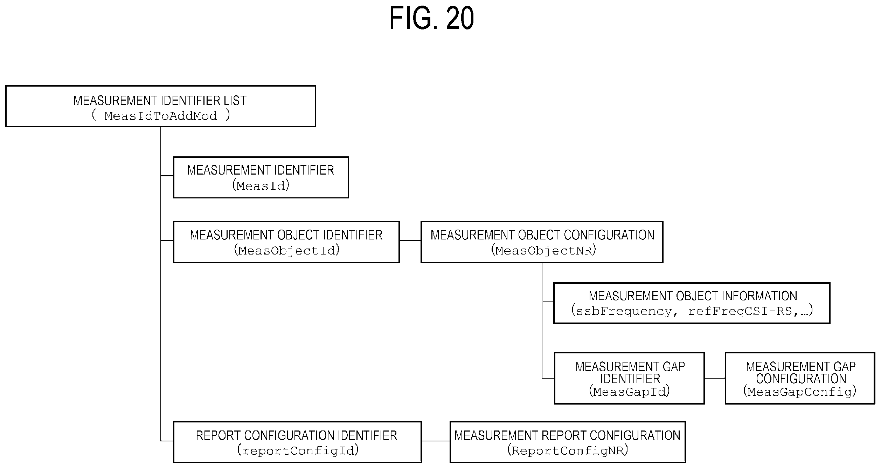

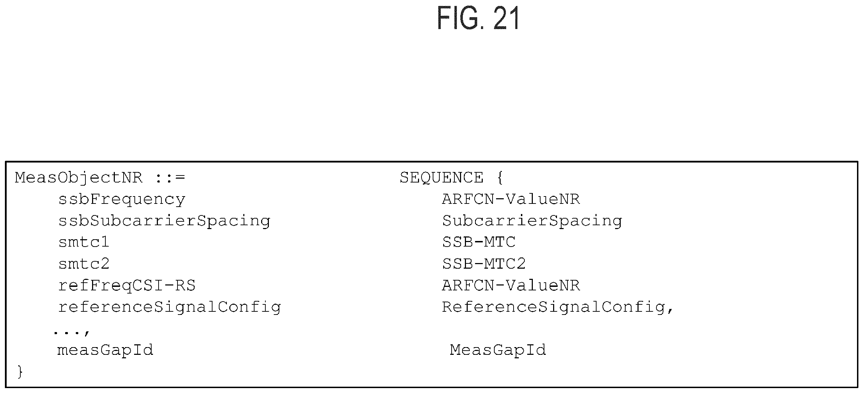

As illustrated in Figs. 20 and 21, each of a plurality of measurement object configurations includes the measurement gap identifier. Specifically, the measurement object configuration (MeasObjectNR) includes a set of measurement object information (for example, ssbFrequency, ssbSubcarrierSpacing, smtc1, smtc2, refFreqCSI-RS, reference Signal Config, and the like) and measurement gap identifier. Accordingly, the measurement gap identifier is associated with the measurement identifier via the measurement object identifier associated with the measurement object configuration including the measurement gap identifier. As a result, each of a plurality of measurement configurations is associated with the measurement identifier via the measurement gap identifier.

Further, the identification information may be included in the RRC message, similarly to any of the described above operation examples. The identification information may be associated with the measurement gap configuration such that it is included in the same set as the measurement gap configuration, or may be associated with the measurement gap configuration via at least one of the measurement identifier, the measurement object identifier, the reporting configuration identifier, and the measurement gap identifier.

Steps S102 to S104 are similar to those in the above-described operation examples.

Step S105 is similar to that in the above-described operation example. The UE 100 (the controller 120) performs measurement on the measurement object based on the measurement object configuration associated with the measurement object identifier included in the same measurement object configuration during the measurement gap constituting the gap pattern based on the measurement gap configuration associated with the measurement gap identifier included in the measurement object configuration. Similarly, in a case in which it is determined that the measurement gap configuration in the same set as the identification information is for measurement of the PRS, the UE 100 (the controller 120) performs measurement on the PRS on the basis of the PRS configuration during the measurement gap of the gap pattern configured based on the measurement gap configuration.

Step S 106 is similar to that in the above-described operation example.

As described above, the RRC message may include a plurality of measurement object configurations constituted by the measurement object configurations. Each of a plurality of measurement object configurations may include the measurement gap identifier. Each of a plurality of measurement gap configurations is associated with the measurement identifier via the measurement object identifier and the measurement gap identifier. Further, each of a plurality of measurement gap configurations is associated with the measurement object configuration in the same measurement object configuration via the measurement gap identifier. Therefore, even though a plurality of gap patterns are configured, the UE 100 can determine the gap pattern to be used for measurement and a type of measurement. Further, the base station 200 can appropriately control the gap pattern which is used for measurement by the UE 100. As a result, in a case in which a plurality of gap patterns are configured, appropriate measurement can be performed.

In addition, since one measurement gap configuration is associated with one measurement object configuration, each frequency layer can be associated with only one gap pattern.

### (5) Fifth Operation Example

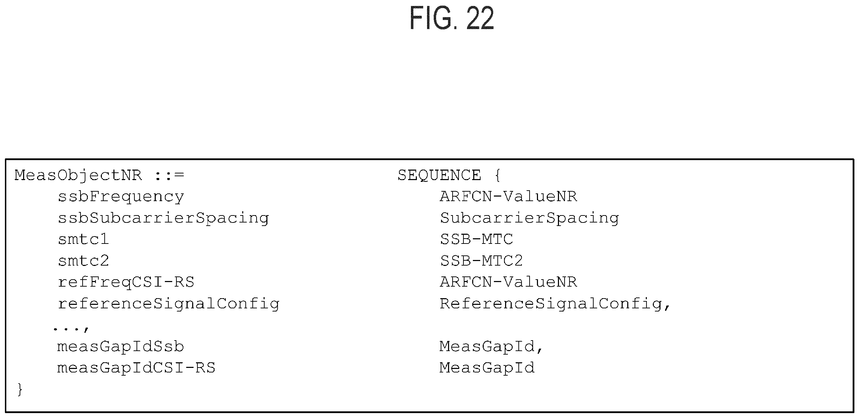

A fifth operation example will be described with reference to Figs. 7 and 22, focusing on differences from the above-described operation examples. In the fifth operation example, the measurement gap identifier is configured, independently of a measurement object configuration for a first reference signal and a measurement object configuration for a second reference signal.

In step S101, the base station 200 (the controller 230) generates the RRC message, similarly to the above-described operation examples. Similarly to the fourth operation example, the RRC message includes a list of measurement objects (MeasObjectToAddModList) and a list of measurement gap configurations (MeasGapToAddModList).

As illustrated in Fig. 22, each of a plurality of measurement object configurations may include measurement object configurations (that is, the measurement object information) for a plurality of reference signals. For example, each of a plurality of measurement object configurations includes a measurement object configuration (For example, ssbFrequency, ssbSubcarrierSpacing, smtc1, smtc2, and the like.) for a first reference signal (For example, SSB) and a measurement object configuration (for example, refFreqCSI-RS, etc.) for a first reference signal (for example, CSI-RS).

Further, each of a plurality of measurement object configurations includes the measurement gap identifier. The measurement gap identifier is configured, independently of each of a plurality of reference signals. Specifically, the measurement gap identifier is configured, independently of the measurement object configuration for the first reference signal and the measurement object configuration for the second reference signal. As illustrated in Fig. 22, for example, the measurement gap identifier (measGapIdSsb) for SSB is configured in the measurement object configuration for SSB, and the measurement gap identifier (measGapIdCSI-RS) for CSI-RS is configured in the measurement object configuration for CSI-RS.

Further, the identification information may be included in the RRC message, similarly to any of the described above operation examples. The identification information may be associated with the measurement gap configuration such that it is included in the same set as the measurement gap configuration, or may be associated with the measurement gap configuration via at least one of the measurement identifier, the measurement object identifier, the reporting configuration identifier, and the measurement gap identifier.

Steps S102 to S104 are similar to those in the above-described operation examples.

Step S105 is similar to that in the above-described operation example. The UE 100 (the controller 120) performs measurement on the measurement object based on the measurement object configuration for the first reference signal associated with the measurement object identifier included in the same measurement object configuration during the measurement gap constituting the gap pattern based on the measurement gap configuration associated with the measurement gap identifier for the first reference signal. Similarly, the UE 100 (the controller 120) performs measurement on the measurement object based on the measurement object configuration for the second reference signal associated with the measurement object identifier included in the same measurement object configuration during the measurement gap constituting the gap pattern based on the measurement gap configuration associated with the measurement gap identifier for the second reference signal.

Similarly, in a case in which it is determined that the measurement gap configuration in the same set as the identification information is for measurement of the PRS, the UE 100 (the controller 120) performs measurement on the PRS on the basis of the PRS configuration during the measurement gap of the gap pattern configured based on the measurement gap configuration.

Step S 106 is similar to that in the above-described operation example.

As described above, each of a plurality of measurement object configurations may further include the measurement object configuration for the first reference signal and the measurement object configuration for the second reference signal. The measurement gap identifier may be configured, independently of the measurement object configuration for the first reference signal and the measurement object configuration for the second reference signal. Accordingly, it is possible to apply a different measurement gap configuration to each reference signal serving as the measurement object while associating one measurement gap configuration with one measurement object configuration.

### (Other Embodiments)

In each of the operation examples described above, the example in which the RRC message includes the identification information is described. Therefore, in each of the operation examples, the identification information may be associated with the measurement gap configuration such that it is included in the same set as the measurement gap configuration, or may be associated with the measurement gap configuration via at least one of the measurement identifier, the measurement object identifier, the reporting configuration identifier, and the measurement gap identifier.

Further, in each of the operation examples, the identification information may be the enumeration-type flag instead of the Boolean-type flag, similarly to the fourth modification example of the first operation example.

In the above-described embodiment, in the second to fifth operation examples, the measurement gap identifier is associated with the measurement identifier, but the present invention is not limited thereto. Instead of the measurement gap identifier, the measurement gap configuration itself may be associated with the measurement identifier. Accordingly, the measurement gap identifier may be replaced with the measurement gap configuration. In this case, the measurement configurations can be constituted not to include a list of measurement gap configurations (MeasGapToAddModList) to be added and/or changed. Also, the measurement configuration may include a list of measurement gap configurations to be removed instead of the list of measurement gap identifiers to be removed (MeasGapToRemoveList).

In the third operation example, each of a plurality of measurement report configurations (ReportConfigNR) includes the measurement gap identifier (MeasGapId), but the present invention is not limited thereto. For example, in the list of measurement report configurations (ReportConfigToAddModList), each measurement report configuration (ReportConfigToAddMod) that is information elements higher in order than the measurement report configuration (ReportConfigNR) may be associated with the measurement gap identifier (MeasGapId) or the measurement gap configuration (MeasGapConfig). For example, the list of measurement report configurations may include a set of measurement report configuration (ReportConfigToAddMod) and measurement gap identifier (MeasGapId) or measurement gap configuration (MeasGapConfig). The measurement report configuration (ReportConfigToAddMod) may include the measurement gap identifier (MeasGapId) or the measurement gap configuration (MeasGapConfig) outside the measurement report configuration (ReportConfigNR).

In addition, each of a plurality of measurement report configurations (ReportConfigNR) includes the identification information (forPrs, prs), but the present invention is not limited thereto. For example, the list of measurement report configurations may include a set of measurement report configuration (ReportConfigToAddMod) and identification information (forPrs, prs). The measurement report configuration (ReportConfigToAddMod) may include the identification information (forPrs, prs) outside the measurement report configuration (ReportConfigNR).

In the fourth and fifth operation examples, each of a plurality of measurement object configurations (MeasObjectNR) includes the measurement gap identifier (MeasGapId), but the present invention is not limited thereto. For example, in the list of measurement object configurations (MeasObjectToAddModList), each measurement object configuration (MeasObjectToAddMod) which is an information element higher in order than the measurement object configuration (MeasObjectNR) may be associated with the measurement gap identifier (MeasGapId) or the measurement gap configuration (MeasGapConfig). For example, the list of measurement object configurations may include a set of measurement object configurations (MeasObjectToAddMod) and measurement gap identifiers (MeasGapId) or measurement gap configurations (MeasGapConfig). The measurement object configuration (MeasObjectToAddMod) may include the measurement gap identifier (MeasGapId) or the measurement gap configuration (MeasGapConfig) outside the measurement object configuration (MeasObjectNR).

Further, each of the plurality of measurement object configurations (MeasObjectNR) includes the identification information (forPrs), but the present invention is not limited thereto. For example, the list of measurement object configurations may include a set of measurement object configurations (MeasObjectToAddMod) and identification information (forPrs). The measurement object configuration (MeasObjectToAddMod) may include the identification information (forPrs) outside the measurement object configuration (MeasObjectNR).

The operation sequence (and the operation flow) in the above-described embodiment may not necessarily be executed in time series according to the order described in the flow diagram or the sequence diagram. For example, the steps in the operation may be performed in an order different from the order described in the flowchart or the sequence diagram, or may be performed in parallel. In addition, some of the steps in the operation may be removed or additional steps may be added to the process. Furthermore, the operation sequence (and the operation flow) in the above-described embodiment may be performed separately and independently, or may be performed by combining two or more operation sequences (and operation flows). For example, some steps of one operation flow may be added to other operation flows, or some steps of one operation flow may be replaced with some steps of other operation flows.

In the above-described embodiments, the mobile communication system based on the NR is described as the example of the mobile communication system 1. However, the mobile communication system 1 is not limited to this example. The mobile communication system 1 may be a system conforming to the TS of any of LTE or other generation systems (for example, sixth generation) of the 3GPP standard. The base station 200 may be an eNB providing protocol terminations of E-UTRA user plane and control plane toward the UE 100 in LTE. The mobile communication system 1 may be a system conforming to a TS defined in a standard other than the 3GPP standard. The base station 200 may be an integrated access and backhaul (IAB) donor or an IAB node.

A program for causing a computer to execute each process performed by the UE 100 or the base station 200 may be provided. The program may be recorded in a computer readable medium. The program may be installed in the computer by using the computer readable medium. Here, the computer readable medium in which the program is recorded may be a non-transitory recording medium. The non-transitory recording medium is not particularly limited, but may be, for example, a recording medium such as a CD-ROM (Compact Disk Read Only Memory) or a DVD-ROM (Digital Versatile Disc Read Only Memory). Furthermore, a circuit that executes each process to be performed by the UE 100 or the base station 200 may be integrated, and at least a part of the UE 100 or the base station 200 may be configured as a semiconductor integrated circuit (a chipset or a SoC (System On Chip)).

In the above-described embodiment, "transmit" may mean performing a process of at least one layer in a protocol stack used for transmission, or may mean physically transmitting a signal wirelessly or by wire. Alternatively, "transmit" may mean a combination of performing of the process of at least one layer and physically transmitting of a signal wirelessly or by wire. Similarly, "receive" may mean performing a process of at least one layer in a protocol stack used for reception, or may mean physically receiving a signal wirelessly or by wire. Alternatively, "receive" may mean a combination of performing of the processing of at least one layer and physically receiving of a signal wirelessly or by wire. Similarly, "acquire (obtain/acquire)" may mean acquiring information from stored information, may mean acquiring information from information received from other nodes, or may mean acquiring information by generating the information. Similarly, the descriptions "on the basis of" and "depending on/in response to" do not mean "only on the basis of" or "depending only on" unless explicitly stated otherwise. The description "on the basis of" means both "only on the basis of" and "at least in part on the basis of." Similarly, the description "according to" means both "only according to" and "at least partially according to." Similarly, "include" and "comprise" do not mean to include only the listed items, but mean that the terms may include only the listed items or may include additional items in addition to the listed items. Similarly, in the present disclosure, "or" does not mean exclusive OR but means OR. Moreover, any reference to elements using designations such as "first", "second", and the like used in the present disclosure does not generally limit the amount or order of those elements. These designations may be used in the present disclosure as a convenient method to distinguish between two or more elements. Therefore, references to first and second elements do not mean that only two elements can be employed therein or that the first element should precede the second element in any form. In the present disclosure, when articles such as a, an, and the in English are added by translation, these articles include a plurality of articles unless the context clearly indicates otherwise.

Although the present disclosure has been described in accordance with examples, it is understood that the present disclosure is not limited to the examples or structures. Various modifications or modifications within an equivalent range are also included in the present disclosure. In addition, various combinations or modes, or other combinations or modes including only one element, more elements, or less elements are also included within the scope and idea of the present disclosure.

### (Supplementary Notes)

Features related to the above-described embodiment are additionally described.

### (Supplementary Note 1)

A communication apparatus, comprising:
a communicator configured to receive a radio resource control (RRC) message including a plurality of measurement gap configurations from a network; and
a controller configured to perform measurement on a positioning reference signal during each measurement gap configured based on the plurality of measurement gap configurations,
wherein the RRC message includes identification information associated with each of the plurality of measurement gap configurations, and
the identification information indicates that an associated measurement gap configuration is for measurement of the positioning reference signal.

### (Supplementary Note 2)

The communication apparatus according to supplementary note 1,
wherein the RRC message includes a set of each of the plurality of measurement gap configurations and identification information associated with each of the plurality of measurement gap configurations.

### (Supplementary Note 3)

The communication apparatus according to supplementary note 1 or 2,
wherein the controller is configured to perform measurement on the positioning reference signal on a basis of the measurement gap configuration associated with the identification information.

### (Supplementary Note 4)

Abase station, comprising:
a communicator configured to transmit a radio resource control (RRC) message including a plurality of measurement gap configurations to a communication apparatus,
wherein the RRC message includes identification information associated with each of the plurality of measurement gap configurations, and
the identification information indicates that an associated measurement gap configuration is for measurement of the positioning reference signal.

### (Supplementary Note 5)

A communication method performed by a communication apparatus, comprising the steps of:
receiving a radio resource control (RRC) message including a plurality of measurement gap configurations from a network; and
performing measurement on a positioning reference signal during each measurement gap configured based on the plurality of measurement gap configurations,
wherein the RRC message includes identification information associated with each of the plurality of measurement gap configurations, and
the identification information indicates that an associated measurement gap configuration is for measurement of the positioning reference signal.

## Claims

1. A communication apparatus (100), comprising:
a communicator (110) configured to receive a radio resource control (RRC) message including a plurality of measurement gap configurations from a network (10); and
a controller (120) configured to perform measurement on a positioning reference signal during each measurement gap configured based on the plurality of measurement gap configurations,
wherein the RRC message includes identification information associated with each of the plurality of measurement gap configurations, and
the identification information indicates that an associated measurement gap configuration is for measurement of the positioning reference signal.

2. The communication apparatus according to claim 1,
wherein the RRC message includes a set of each of the plurality of measurement gap configurations and identification information associated with each of the plurality of measurement gap configurations.

3. The communication apparatus according to claim 1 or 2,
wherein the controller is configured to perform measurement on the positioning reference signal on a basis of the measurement gap configuration associated with the identification information.

4. Abase station (200), comprising:
a communicator (210) configured to transmit a radio resource control (RRC) message including a plurality of measurement gap configurations to a communication apparatus,
wherein the RRC message includes identification information associated with each of the plurality of measurement gap configurations, and
the identification information indicates that an associated measurement gap configuration is for measurement of the positioning reference signal.

5. A communication method performed by a communication apparatus (100), comprising the steps of:
receiving a radio resource control (RRC) message including a plurality of measurement gap configurations from a network (10); and
performing measurement on a positioning reference signal during each measurement gap configured based on the plurality of measurement gap configurations,
wherein the RRC message includes identification information associated with each of the plurality of measurement gap configurations, and
the identification information indicates that an associated measurement gap configuration is for measurement of the positioning reference signal.
